(19) Europäisches Patentamt

European Patent Office

Office européen des brevets

(11) Veröffentlichungsnummer: **0 258 480**
**A1**

(12) # EUROPÄISCHE PATENTANMELDUNG

(21) Anmeldenummer: **86112231.5**

(51) Int. Cl.⁴: **A22C 21/00**

(22) Anmeldetag: **04.09.86**

(43) Veröffentlichungstag der Anmeldung:
**09.03.88 Patentblatt 88/10**

(84) Benannte Vertragsstaaten:
**BE DE FR GB IT NL**

(71) Anmelder: **Goldi Geflügelprodukte GmbH & Co. KG Dittlofsroda
Zum Schondratal 26
D-8781 Wartmannsroth(DE)**

(72) Erfinder: **Zeitz, Rudolf
Zum Schondratal 16
D-8781 Wartmannsroth(DE)**

(74) Vertreter: **Pöhner, Wilfried Anton, Dr.
Kaiserstrasse 27 Postfach 63 23
D-8700 Würzburg 1(DE)**

(54) **Vorrichtung zum Schlachten von Geflügel.**

(57) Zum Schlachten von Geflügel, wie Hühner, Hähnchen odgl. bei welchem der Kopf entfernt wird, schlägt die Erfindung, insbesondere zur Verwendung in Schlachtlinien eine Vorrichtung vor, durch die nach dem Entfernen des Kopfes eine Schneidevorrichtung die Haut am Hals 9 des Geflügels im Rückenbereich und in Längsrichtung zertrennt.

## Vorrichtung zum Schlachten von Geflügel

Die Erfindung bezieht sich auf eine Vorrichtung zum Schlachten von Geflügel, wie Hühner, Hähnchen odgl., bei welcher der Kopf entfernt wird.

Im Stande der Technik ist bekannt, das Schlachten und Ausnehmen und das verkaufsfertige Zubereiten von Geflügel auf sog. Schlachtlinien in industriellem Maßstabe durchzuführen. Aus hygienischen und lebensmittelrechtlichen Gründen ist jedes Produkt auf seine Unbedenklichkeit und den einwandfreien Zustand hin zu überprüfen, damit das Geflügel in gebrauchsfertigem Zustand die Anlage verläßt. Hierzu sind geeignet geschulte Personen an der Schlachtlinie tätig, die jedes einzelne Tier einer Sichtprüfung unterziehen. Eine der dann noch vorzunehmenden Kontrollen besteht in der Überprüfung, ob jedem einzelnen Tier der Kropf entfernt worden ist. Zur Vorbereitung hierfür drückt sich, nachdem dem Tier der Kopf entfernt worden ist, ein Hammer zwischen Hals und Körper gegen das Tier, durchtrennt in einer Quetschbewegung den Hals und führt im Anschluß daran eine Abwärtsbewegung durch, so daß hierdurch die Halshaut aufgerissen und der Hals selbst heruntergezogen wird. Hierdurch wird der entsprechende Einblick freigegeben, so daß ohne weiteres die Sichtprüfung auf Entfernung des Kropfes vornehmbar wird. Als wesentlicher Nachteil ist anzusehen, daß durch das Abtrennen des Halses dieser einerseits der weiteren Verwertung verlorengeht und andererseits im Bereich der Wirbelsäule des Tieres scharfkantige Knochen zurückbleiben, die die spätere Verpackungshülle häufig zerschneiden und verletzen.

Hiervon ausgehend hat sich die Erfindung die Verbesserung derartiger Schlachtvorrichtungen dahingehend zur Aufgabe gemacht, daß zwar eine Kontrolle auf Herausnahme des Kropfes per Sicht möglich ist, der Hals jedoch am Tier verbleibt und weiter verwendet werden kann.

Gelöst wird diese Aufgabe erfindungsgemäß dadurch, daß nach dem Entfernen des Kopfes eine Schneidevorrichtung die Haut am Hals des Geflügels im Rückenbereich und in Längsrichtung zertrennt. Der Schnitt in Längsrichtung bewirkt bei entferntem Kopf, daß sich die Haut des Halses selbständig aufwickelt und einrollt. Hierdurch wird die Sichtkontrolle auf Entfernung des Kropfes möglich. Durch Anbringung des Schnittes im Rückenbereich ist es aufgrund der anatomischen Beschaffenheit des Halses, insbesondere aufgrund der darunter befindlichen Wirbelsäule, ohne weiteres möglich, das erfindungsgemäße Ziel der Auftrennung nur der Haut im Halsbereich, im übrigen jedoch den Hals nicht abzutrennen, besonders einfach erreichen. Dadurch daß der Hals am Geflügel verbleibt, erhält man ein höheres, sich entsprechend auf den Verkaufspreis auswirkendes Gewicht. Zudem rollt sich der Hals beim Einschieben in die Verpackung zusammen, so daß in aller Regel das Verpackungsmaterial nicht verletzt werden kann. Es stehen keine Knochensplitter über und es kann ein stärkerer Druck beim Verpacken selbst angewandt werden. Nachdem der Hals im Gegensatz zur bisherigen Praxis dann nicht mehr abgequetscht wird, erhält das Geflügel ein sauberes und damit ansprechenderes Aussehen. Schließlich ist noch als Vorzug anzusehen, daß der erfindungsgemäße Teil der Vorrichtung leicht und bequem in bereits bestehende, bratfertig verpacktes Geflügel herstellende Schlachtlinien aufgrund seiner Dimensionierung rasch und unproblematisch eingebaut und ausgetauscht werden kann.

In einer zweckmäßigen Ausgestaltung ist vorgesehen, die Schnittbewegung in Richtung vom Körper weg vorzunehmen. Anders ausgedrückt soll die Schnittbewegung in Richtung auf den inzwischen bereits entfernten Kopf zu erfolgen. Beim Transport innerhalb bestehender Schlachtlinien wird das Geflügel mit seinen Beinen aufgehängt, so daß der Körper und zunächst auch der Kopf frei nach unten hängen.

Für des Ansetzen der Schneidevorrichtung und den vorzunehmenden Schnitt ist es am bequemsten, wenn er beginnend an der Übergangsstelle des Halses zum Körper vorgenommen wird, da andernfalls ein präziseres Justieren und Einstellen sowie ein leichtes Abgleiten vom nach dem Entfernen des Kopfes dann freien Ende des Halses möglich wäre. Ein sauberes Arbeiten wird bei dieser Schnittrichtung ebenfalls möglich.

In konkreter Ausgestaltung der Schneidevorrichtung wird die Verwendung eines Messers vorgeschlagen, das gegen den Hals preßbar ist, wobei dieser in einer Aufnahme abgestützt werden kann. Letzterer bewirkt, daß der Hals der Schneide des Messers nicht ausweichen und seitlich wegrutschen kann.

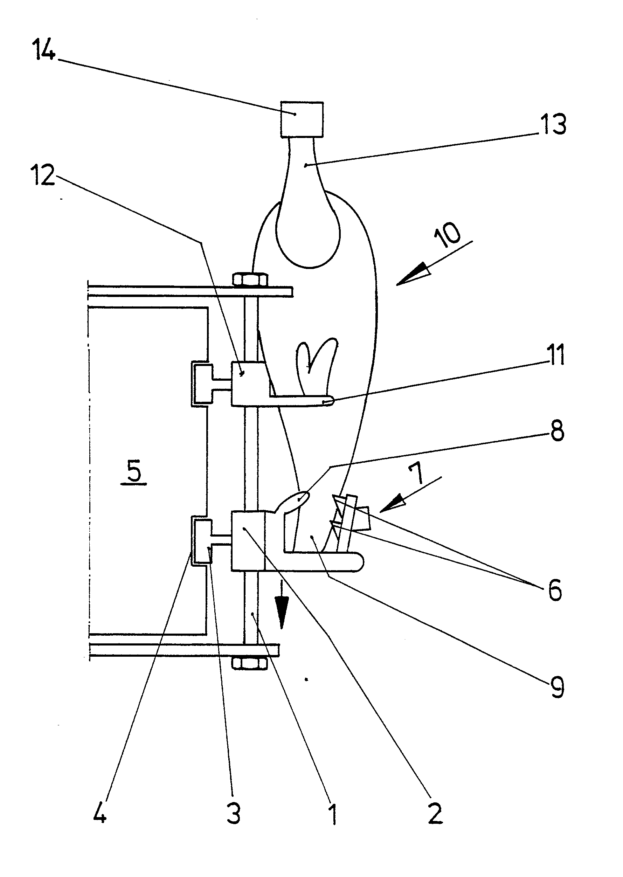

Schließlich wird für den konkreten, die Schnittbewegung des Messers auslösenden Teil der Vorrichtung eine Kurvenscheibe vorgeschlagen, in die das Messer (mittel-oder unmittelbar) eingreift, während eines Teiles der translatorischen Bewegung des Geflügels entlang der Schlachtlinie mitgeführt wird und durch die von der Kurvenscheibe ausgelöste Bewegung den Schnitt vollführt. Unter mittelbarem Eingriff des Messers in die Kurvenscheibe ist zu verstehen, daß das Messer selbst auf einem Schiebeblock befestigt ist, der seinerseits erst in die Nut der Kurvenscheibe eingreift. Unter translatorischer Bewegung ist im Zusammenhang mit diesem Merkmal einzig die Vorwärtsbewegung eines bestimmtes Tieres entlang der Schlachtlinie zu verstehen, auch dann, wenn, was grundsätzlich denkbar ist, das erfindungsgemäße Teil im Bereich einer Rolle umgelenkt und dort das Zertrennen der Halshaut vorgenommen wird. Weitere Einzelheiten, Merkmale und Vorteile der Erfindung lassen sich dem nachfolgenden Beschreibungsteil entnehmen, in dem an Hand der Zeichnung ein Ausführungsbeispiel der Erfindung näher erläutert wird. Sie zeigt den erfindungsgemäßen Teil einer Schlachtlinie in Seitenansicht, bei dem gerade einem Tier die Halshaut mit Hilfe eines Messers zertrennt wird.

Auf einer vertikal verlaufenden Schiene 1 ist ein Schiebeblock 2 befestigt, der einerseits über einen entsprechend geformten Führungsstift 3 in die Nut 4 einer Kurvenscheibe 5 eingreift und hierdurch abwärts bewegt wird. Die Kurvenscheibe 5 läuft etwa senkrecht zur Zeichenebene und die Nut 4 ist in Bewegungsrichtung der Schlachtlinie abwärts geführt.

Am Schiebeblock 2 ist ein mit zwei Klingen 6 ausgerüstetes Messer 7 mit geeigneten, hier nicht gezeigten Mitteln angebracht, die es gegen den zwischen Messer 7 und Schiebeblock 2 befindlichen und durch eine untere Aufnahme 8 fixierten Hals 9 eines Tieres 10 pressen. Dieses ist in der Schlachtlinie so aufgehängt, daß das Messer 7 von der Rückseite her an Hals 9 anliegt. Die Schnittbewegung erfolgt, bestimmt durch die Form der Nut 4 von Kurvenscheibe 5 von oben nach unten, also ausgehend vom Übergang des Halses 9 zum Körper bis an sein unteres Ende, an dem sich ursprünglich der inzwischen bereits entfernte Kopf befunden hat. Das Messer 7 ist so einzustellen, daß nur die Haut zertrennt, der Hals 9 selbst weitgehend unversehrt bleibt.

Das Tier 10 selbst wird weiterhin festgehalten in einer oberen Aufnahme 11, die ebenfalls mit einem auf der Schiene 1 befindlichen Schiebeblock 12 verbunden ist und ebenso über eine Nut 4 in der Kurvenscheibe 5 geführt ist. Allerdings vollführt die obere Aufnahme 11 und der zugehörige Schiebeblock 12 keine Abwärtsbewegung wie der untere Schiebeblock 2. Das Tier 10 ist über seine Beine 13 am Transportband der Schlachtlinie befestigt.

Die Funktion des Gerätes ist wie folgt: Zunächst befindet sich der Schiebeblock 2 auf der Schiene 1 in seiner oberen Ausgangsposition, also unmittelbar neben oder doch in der Nähe des Schiebeblockes 12. Sobald das zu bearbeitende Tier in die untere Aufnahme 8 und die obere Aufnahme 11 eingelegt ist, wird das Messer 7 vom Rückenbereich her gegen den Hals 9 gepreßt. Bei Fortsetzen der translatorischen Bewegung 10 über das Transportband 14 wird sich dann der Schiebeblock 2 aufgrund seines in die Nut 4 eingreifenden Führungsstiftes 3 nach unten zu und zwar so weit bewegen, bis die Haut des Halses 9 über der gesamten Länge zertrennt ist. Daraufhin rollt sich die Haut selbsttätig zusammen und es kann durch eine kurze Sichtprüfung die Entfernung des Kropfes festgestellt werden. Anschließend wird das Tier 10 aus diesem Teil der Vorrichtung bzw. den Aufnahmen 8, 11 freigegeben, der Schiebeblock 2 in leerem Zustand nach oben gefahren, wo das nächste Tier in der soeben beschriebenen Art und Weise bearbeitet wird.

Im Ergebnis schlägt die Erfindung einen Teil aus einer Schlachtlinie vor, mit dessen Hilfe die Haut des Geflügels am Hals in Längsrichtung zertrennt wird, so daß eine Überprüfung auf Entfernung des Kropfes vornommen werden kann, andererseits jedoch der Hals des Tieres zur weiteren Verwertung erhalten bleibt und demzufolge ein hohes Verkaufsgewicht erzielbar wird.

## Ansprüche

1. Vorrichtung zum Schlachten von Geflügel, wie Hühner, Hähnchen odgl., bei welcher der Kopf entfernt wird **dadurch gekennzeichnet,** daß nach dem Entfernen des Kopfes eine Schneidevorrichtung die Haut am Hals 9 des Geflügels im Rückenbereich und in Längsrichtung zertrennt.

2. Vorrichtung nach Anspruch 1, **dadurch gekennzeichnet,** daß die Schnittbewegung vom Körper weg erfolgt.

3. Vorrichtung nach Anspruch 1 oder 2, **dadurch gekennzeichnet,** daß der Hals 9 in einer Aufnahme 8, 11 abstützbar und ein Messer 7 gegen den Hals 9 preßbar ist.

4. Vorrichtung nach einem der Ansprüche 1 bis 3, **dadurch gekennzeichnet,** daß das Messer 7 in eine Kurvenscheibe 5 eingreift, während der translatorischen Bewegung des Geflügels mitgeführt wird und hierdurch die Schnittbewegung vollführt.

14

13

12

10

11

8

7

5

6

9

4    3    1    2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 095 535 (MEYN)<br>* Page 3, lines 19-90; page 3, lines 101-123; claim 4 * | 1-4 | A 22 C 21/00 |
| A | US-A-4 322 872 (MEYN) | | |

|  |
|---|
| **RECHERCHIERTE SACHGEBIETE (Int. Cl.4)** |
| A 22 C |

Der vorliegende Recherchenbericht wurde für alle Patentansprüche erstellt.

| Recherchenort | Abschlußdatum der Recherche | Prüfer |
|---|---|---|
| DEN HAAG | 09-04-1987 | DE LAMEILLIEURE D. |